# EUROPEAN PATENT APPLICATION

(11) **EP 2 255 678 A2**
(43) Date of publication of application: **01.12.2010**
(21) Application number: 10175591.6
(22) Date of filing: 04.10.2004
(51) Int. Cl.: A23L 1/00, A23P 1/16, A47J 31/44, B05B 7/00

(54) **Method and apparatus for forming gas bubbles in a liquid product.**

(30) Priority: 02.10.2003 NL 1024438
(62) Divisional of application: 04077752.6
(71) Applicant: Friesland Brands B.V., 3818 LE Amersfoort (NL)
(72) Inventor: Poortinga, Albert Thijs, 7422 LN, Deventer (NL); Koman-Boterblom, Hendrika, 7421 EZ, Deventer (NL); Wijnen, Maria Elisabeth, 7425 GS, Deventer (NL)
(74) Representative: Jansen, Cornelis Marinus

(57) **Abstract**

A method for forming gas bubbles in a liquid product, wherein different gas beams are spouted into the product. In addition, the invention provides an apparatus for forming gas bubbles in a liquid product, in particular according to a method of one of the preceding claims, the apparatus being provided with a mixing space (3) to mix the product with gas, the apparatus comprising spouting means (1, 4) to spout different gas beams into the mixing space (3).

## Description

The invention relates to a method for forming gas bubbles and in particular stable gas bubbles in a liquid product. In addition, the invention relates to an apparatus for carrying out such a method. Finally, the invention concerns a food and in particular an edible foam prepared according to such a method and/or utilizing such an apparatus.

Such methods are known from practice. The known methods are suitable, for instance, for producing a foam and/or an airy product. In these known methods, the starting material is a liquid product and in particular a protein-containing liquid product, in which a gas is incorporated. This gas is, for instance, a gas that is poorly soluble in the product. The gas and the protein-containing product are introduced into a mixing space and mixed, for instance by vigorous blending and/or whipping, in such a way that the gas bubbles referred to are formed in the product.

In a preferred embodiment which is described in detail in the Dutch patent application 1024435 which has been filed at the same date as the present application, the product is subsequently heated, so that proteins on the surface of the bubbles denature and crosslink. When the bubbles presently shrink, the crosslinked protein layers on the bubble surface become tensioned, such that shrinkage stops. In this way, bubbles have been formed which are stable for a very long time (i.e. whose size remains constant in time). Such shrinkage occurs spontaneously in a part of the bubbles as a result of so-called Ostwald ripening, but is preferably promoted by making bubbles which consist partly of steam, which bubbles shrink as a result of condensation of the steam. This preferred method is incorporated into the present description by reference.

The product is in particular a food, which is for instance pourable and/or drinkable. In that case, with the gas bubbles formed, an improved taste sensation can be achieved. Moreover, the food can thus have a relatively low fat content while preserving a desired creamy taste sensation.

The number of gas bubbles and the average gas bubble size appear to have an important influence on sensory properties of the food, for instance creaminess, freshness, softness or airiness. Of the gas bubbles formed with the known method, only a part proves to be sufficiently stable in the liquid products to be able to maintain themselves in the product for a longer time. Another part of the gas bubbles proves to coarsen strongly within a day. In fluid products, this subsequently leads to creaming and hence the disappearance of the bubbles. The latter, instable, bubbles moreover prove each to have a relatively great diameter, so that these bubbles contain relatively much of the gas supplied. The known method is therefore little efficient. A possible explanation of the fact that only small bubbles and typically bubbles having a size of between 5 and 30 µm are stable to shrinkage, is that the protein layer in this case is comparatively stronger. The larger, unstable bubbles will therefore still exhibit Ostwald ripening with respect to each other, so that much gas is lost via thus formed, large, creaming bubbles.

The object of the present invention is to eliminate the disadvantages of the known methods while maintaining the advantages thereof. In particular, the object of the invention is to provide a method with which a relatively large number of stable gas bubbles can be formed in the product.

According to the invention, to that end, the method is characterized in that different gas beams, and preferably gas beams consisting of a mixture of steam and a non-condensing gas, are spouted into the product.

Surprisingly, it has been found that in this way, a relatively large number of stable gas bubbles can be formed. This can be explained in that the different gas beams jointly have a relatively large mixing surface to mix with the product. According to a simple further elaboration, at least one gas beam is spouted into the product via a beam divider. The beam divider can for instance be provided with passages, in particular pores, having diameters of less than about 1 mm, in order for different narrow gas beams to be formed which have a large mixing surface. The beam divider can for instance comprise a membrane, such as a metal or ceramic membrane or a similar permeable material, which has been found to give very good results. By the use of the beam divider, in a simple manner, a large number of partial beams can be generated for the purpose of a thorough mixing with the liquid product. Injected beams break up into bubbles. In the preferred embodiment where steam is used, the bubbles subsequently shrink through condensation of the steam.

As stated, it is particularly advantageous according to the invention if the gas beams comprise at least a condensing gas, such as steam, and a gas poorly soluble in the product.

Surprisingly, it has been found that a relatively large number of stable gas bubbles are formed by injecting gas beams of such a composition, significantly more than when use is made of just one beam. Probably, the use of several beams leads to the formed bubbles being covered better with proteins, because of the larger contact surface between gas and product. Possibly, the use of several beams leads to a more efficient breaking up of the beams into bubbles. Preferably, a relatively large part of the gas bubbles shrink after the gas injection to diameters of less than about 100 µm, in particular of less than about 50 µm. Such small gas bubbles have been found to have a relatively long life.

The invention further provides an apparatus for forming gas bubbles in a liquid product, in particular according to a method according to the invention, the apparatus being provided with a mixing space (3) to mix the product with gas, the apparatus comprising spouting means (1, 4) to spout different gas beams into the mixing space (3).

This apparatus is particularly suitable to carry out the method according to the invention, which provides the above-mentioned advantages.

In addition, the invention provides a food prepared with a method according to any one of claims 1-12 and/or utilizing an apparatus according to any one of claims 13-24. This food contains a large number of stable gas bubbles, which imparts good sensory properties to the food, for instance in the areas of taste, creaminess, freshness, softness, airiness.

Presently, the invention will be clarified on the basis of an exemplary embodiment and the drawing, in which:
Fig. 1 shows a schematically represented exemplary embodiment of the invention;
Fig. 2 shows a photograph of a product obtained without beam dividing membrane; and
Fig. 3 shows a photograph of a product obtained with beam dividing membrane.

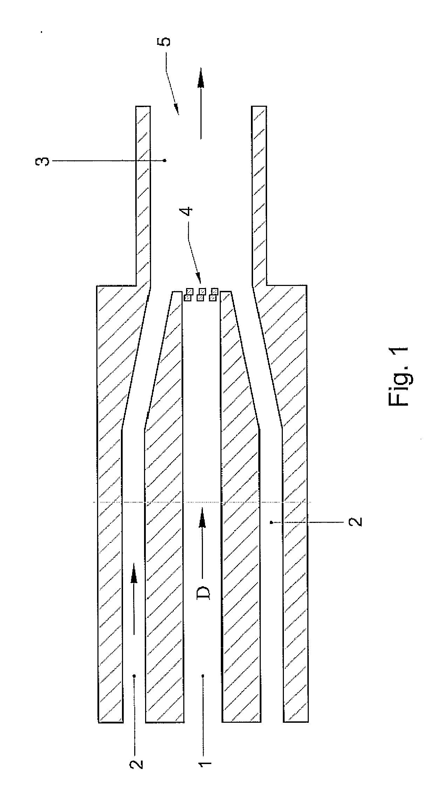

Figure 1 shows a longitudinal cross section of a part of an apparatus for forming gas bubbles in a liquid product. The apparatus is provided with a mixing space 3 to mix the product with gas. The apparatus further comprises spouting means 1, 4 to spout different gas beams into the mixing space 3. These spouting means comprise in particular a steam injector 1. The steam injector comprises a steam supply channel 1 which terminates in the mixing chamber 3. The apparatus further comprises a product supply channel 2 which terminates, separately from the steam supply channel 1, in the mixing chamber 3. As Fig. 1 shows, the product supply channel 2 extends around the steam supply channel 1, at least adjacent the mixing chamber 3. Downstream of the steam injector 1 and product supply 2, viewed in a flow direction D, there is provided a product discharge 5, coupled to the mixing space 3, for discharging the product from the mixing space 3 during use, preferably continuously so.

The steam supply channel 1 is provided at a downstream end with a beam divider in the form of a membrane 4. The membrane 4 is arranged to divide a steam beam supplied via the steam supply channel 1 into a large number of fine partial beams and to spout these as such into the mixing chamber 3. To that end, the membrane comprises different gas passages or pores, which for instance have a diameter of less than about 1 mm. Preferably, the pores have relatively small diameters, for instance in the range of about 1-500 µm, preferably in the range of 10-400 µm, in particular in the range of 50-200 µm, so that a relatively large number of fine partial beams can be generated with the membrane 4.

During use, the liquid product is supplied via the product supply 2 to the mixing space 3. The steam injector 1 is coupled to a steam generator, not shown, arranged to supply a steam beam to the steam injector 1. Upstream of the mixing chamber 3, for instance in the steam generator and/or in the steam supply channel 1, a gas relatively poorly soluble in the product is added to the steam. The mixture of steam and poorly soluble gas is subsequently spouted by the steam injector 1 via the membrane 4 at a particular mixing speed into the mixing space 3 to be mixed with the product.

The composition of the product and the gas mixture, as well as process parameters such as the temperature, pressure, and gas mixing speed, are such that mixing is accompanied by the formation of the stable gas bubbles. To that end, the product can for instance contain protein or protein mixture.

The above-mentioned mixing speed evidently depends *inter alia* on the diameter of pores of the membrane 4, the steam pressure in the steam injector 1 and the mixing chamber pressure. The skilled person can simply obtain a speed suitable for bubble formation through variation of the pore diameters and the pressures mentioned. The mixing chamber pressure can be, for instance, in the range of about 1-2 bars, the steam pressure in the steam supply channel 1 is for instance in the range of 1-10 bars. Evidently, also other pressures and dimensions can be used to obtain a suitable mixing speed of the gas mixture.

What is effected by the membrane 4 is that a large number of fine partial beams are spouted into the product. As a result, in the mixing space 3, a mixing of the product with the gas mixture takes place, such that a large number of stable gas bubbles are formed in the product. Moreover, the product is heated by the steam-containing gas mixture. This is particularly advantageous in a protein-containing product, since the protein can undergo denaturation under the influence of the heating, which strengthens the gas bubbles. After the mixing, the steam condenses, which leads to a desired advantageous reduction of gas bubbles formed.

### Example

A 3.5% whey protein solution, thickened with 0.05% κ-carrageen, was put together in the mixing chamber 3 with a nitrogen/steam mixture, with 20% (based on the product volume) of nitrogen. In a first case, the addition was done by injecting the gas mixture into the mixing chamber 3 in one beam, without using the membrane 4. In the second case, the gas mixture was spouted into the mixing space 3 via the membrane 4.

In both cases, the product was first heated to 50°C. By the steam mixture injection into the mixing chamber 3, the product was subsequently adjusted to a temperature of 100°C at a pressure of 1.5 bars. The product was then held at this treatment temperature for 30 seconds, to be finally cooled to a temperature of 5°C in a few seconds. After 1 day it was measured how much gas the product contained.

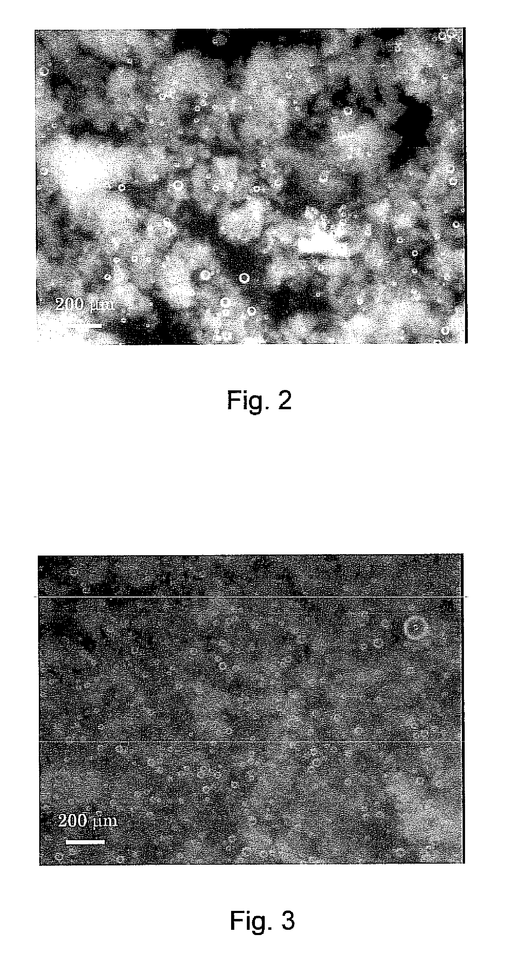

The product treated with one undivided gas beam was found to contain 1% overrun. Fig. 2 shows a photograph of this product. It follows from Fig. 2 that the gas bubbles formed still comprise relatively many unwanted large bubbles. The product treated with the partial beams generated by the membrane 4, of which product Fig. 3 shows a photograph, was found to contain an overrun approximately three times higher. Fig. 3 further shows that the gas bubbles thereby formed are relatively small. The bubbles were found to be stable for at least a few weeks, that is, the bubbles did not measurably change in size over that period. This affords in particular the product obtained with the membrane a good shelf stability and suitability for commercial application.

It will be evident to the skilled person that the invention is not limited to the exemplary embodiment described. Various modifications are possible within the framework of the invention such as it is set forth in the appended claims.

Thus, the product can for instance comprise a protein solution which may or may not be edible. An edible protein solution can for instance comprise a milk protein, a whey protein and casein, egg white proteins, yeast isolate, soy protein, hemoglobin, plant protein isolate, meat protein, collagen, gelatin and the like.

The product can further contain various substances, for instance a thickener, fat, colorings, flavorings, sweeteners and the like.

Furthermore, the product is in particular a food, for instance a beverage, soft drink, yoghurt drink, or the like.

The liquid product can further contain solid substances to be added to the product.

Further, the condensing gas and gas poorly soluble in the product can be injected into the product via the same injection channel or via different injectors.

In addition, one or more condensing gases and/or one or more gases poorly soluble in the product can be used.

Furthermore, for instance a dispersing device, in particular an in-line turrax, can be arranged downstream of the gas mixture injector 1, which has been found to further increase the produced fraction of stable gas bubbles.

In addition, the gas mixing speed can be, for instance, subsonic or supersonic. A supersonic speed has been found to be very advantageous, since at such a high speed, relatively many stable gas bubbles prove to be formed. To that end, the apparatus can be provided, for instance, with different supersonic nozzles.

## Claims

1. A method for forming gas bubbles in a liquid product, **characterized in that** different gas beams are spouted into the product.

2. A method according to claim 1, wherein said gas beams contain at least a condensing gas, which condensing gas preferably comprises steam, and a gas poorly soluble in the product, which gas preferably comprises an inert gas, in particular nitrogen.

3. A method according to claim 2, wherein said gas beams contain at least about 1%, in particular at least about 10%, of gas poorly soluble in the product, which percentages are percentages by volume, based on the volume of the total product.

4. A method according to any one of the preceding claims, wherein at least one gas beam is spouted into the product via a beam divider (4), which beam divider (4) is preferably provided with passages, in particular pores, having diameters of less than about 1 mm and/or wherein the beam divider comprises a membrane (4).

5. A method according to any one of the preceding claims, wherein at least one of said gas beams has a treatment temperature in the range of about 50-150°C.

6. A method according to any one of the preceding claims, wherein the product contains at least one protein or protein mixture.

7. A method according to any one of the preceding claims, wherein said gas beams are spouted into the product at a speed such that at least a part of the gas bubbles formed have a diameter of less than about 100 µm, in particular of less than about 50 µm, and preferably at a subsonic mixing speed.

8. An apparatus for forming gas bubbles in a liquid product, in particular according to a method of any one of the preceding claims, wherein the apparatus is provided with a mixing space (3) to mix the product with gas, the apparatus comprising spouting means (1, 4) to spout different gas beams into the mixing space (3).

9. An apparatus according to claim 8, wherein the spouting means (1) are provided with at least one beam divider (4) to generate different gas beams from a gas beam supplied, said beam divider (4) is preferably provided with different gas passages, said each gas passage preferably having a diameter of less than about 1 mm and preferably in the range of about 10-500 µm, in particular in the range of 20-200 µm.

10. An apparatus according to claim 9, wherein the beam divider comprises a membrane (4) and/or wherein the beam divider (4) extends substantially along or near the mixing space (3).

11. An apparatus according to any one of claims 8-10, wherein the apparatus is provided with a product supply (2) which terminates in the mixing space (3) and/or with a product discharge (5) coupled to the mixing space (3).

12. An apparatus according to any one of claims 8-11, wherein the spouting means (1) comprise a steam injector.

13. An apparatus according to at least claim 8, wherein the apparatus is provided with supply means (1) to supply a gas poorly soluble in the product to said mixing space (3).

14. An apparatus according to claims 8 and 13, wherein said spouting means (1) comprise said supply means of a gas poorly soluble in the product.

15. A food, prepared with a method according to any one of claims 1-7 and/or utilizing an apparatus according to any one of claims 8-14.
